# EUROPÄISCHE PATENTANMELDUNG

(11) **EP 3 296 748 A2**
(43) Veröffentlichungstag der Anmeldung: **21.03.2018**
(21) Anmeldenummer: 17187699.8
(22) Anmeldetag: 24.08.2017
(51) Int. Cl.: G01P 3/00, G01P 3/486, G01P 13/04, G01L 3/08, G01L 3/12

(54) **VORRICHTUNG UND VERFAHREN ZUR MESSUNG EINER ROTATIONSBEWEGUNG SOWIE ZUR ERKENNUNG EINES WELLENBRUCHS**

(30) Priorität: 15.09.2016 DE 102016217690
(71) Anmelder: Rolls-Royce Deutschland Ltd & Co KG, 15827 Blankenfelde-Mahlow (DE)
(72) Erfinder: KESTERING, Jens, 12526 Berlin (DE)
(74) Vertreter: Maikowski & Ninnemann Patentanwälte Partnerschaft mbB

(57) **Zusammenfassung**

Die Erfindung betrifft eine Turbomaschine mit mindestens einer drehbaren Welle und mindestens einer Vorrichtung zur Messung einer Rotationsbewegung eines drehbaren Bauteils (20, 21), insbesondere der Welle, wobei die Vorrichtung einen Empfänger (10, 10') und einen ersten Musterträger (11, 11'), der mindestens eine Musterstelle (110) aufweist, umfasst. Dabei umfasst die Vorrichtung (1, 1', 1") einen zweiten Musterträger (18, 18') mit mindestens einer Musterstelle (180) vorgesehen, wobei die Musterträger (11, 11', 18, 18') jeweils mit dem drehbaren Bauteil (20, 21) verbindbar oder verbunden sind, sodass sie derart gemeinsam damit um eine Rotationsachse (R) bezüglich dem Empfänger (10, 10') rotierbar sind, dass die Musterstelle (110) des ersten Musterträgers (11, 11') in Deckung mit der Musterstelle (180) des zweiten Musterträgers (18, 18') liegt, und wobei der Empfänger (10, 10') ausgebildet und eingerichtet ist, zu erfassen, ob die Musterstellen (110, 180) in Deckung liegen oder nicht. Die Erfindung betrifft ferner ein Verfahren.

## Beschreibung

Die Erfindung betrifft eine Turbomaschine mit den Merkmalen des Anspruchs 1 und ein Verfahren zur Messung einer Rotationsbewegung eines drehbaren Bauteils einer Turbomaschine mit den Merkmalen des Anspruchs 14.

Eine derartige Turbomaschine umfasst mindestens ein drehbares Bauteil, insbesondere in Form einer drehbaren Welle, und mindestens eine Vorrichtung zur Messung einer Rotationsbewegung des drehbaren Bauteils, insbesondere der Welle. Die Vorrichtung umfasst einen Empfänger und einen mit dem Empfänger zusammenwirkenden Musterträger. Der Musterträger umfasst zumindest eine Musterstelle.

Die mit solchen Vorrichtungen gemessenen Rotationsbewegungen des drehbaren Bauteils können z.B. zur Steuerung und Überwachung des drehbaren Bauteils verwendet werden. Bei dem drehbaren Bauteil handelt es sich etwa um eine Welle und/oder eine Achse, insbesondere um eine Welle der Turbomaschine, z.B. der als Flugzeugtriebwerk ausgebildeten Turbomaschine.

Die Messung einer Rotationsbewegung umfasst die Messung einer Rotationsgeschwindigkeit und/oder die Messung einer Rotationsrichtung.

Aus der Praxis sind z.B. induktive Vorrichtungen zur Messung von Rotationsgeschwindigkeiten bekannt, welche auch als Impulsrad, phonisches Rad oder "phonic wheel" bezeichnet werden.

Die DE 10 2007 055 239 A1 beschreibt eine Vorrichtung zur Messung der Rotationsgeschwindigkeit einer in einem Turbinengehäuse gelagerten Hohlwelle eines Strahltriebwerks. Bei dieser Vorrichtung dienen magnetische Flüsse als Informationsträger. Ein Musterträger in Form einer Verzahnung mit mehreren Zähnen als Musterstellen wird an der Hohlwelle angeordnet. Ein benachbart zur Verzahnung angeordneter Sensor dient als Empfänger. Die Verzahnung ist gemeinsam mit der Welle um die Rotationsachse der Welle bezüglich dem Sensor rotierbar, der unterschiedliche magnetische Flüsse erfasst, wenn ein Zahn oder eine Lücke der Verzahnung dem Sensor zugewandt ist.

In einigen Anwendungen, insbesondere bei Turbomaschinen, ist es wünschenswert, neben der Rotationsgeschwindigkeit zusätzlich auch eine Rotationsrichtung des drehbaren Bauteils, insbesondere der Welle, zu messen. Wird z.B. eine nicht in Betrieb befindliche Turbomaschine, z.B. ein Flugzeugtriebwerk, durch einen Wind beaufschlagt, können eine oder mehrere Wellen der Turbomaschine in eine Drehung versetzt werden. Eine solche Situation wird auch als "wind milling" bezeichnet.

Bei einer rückseitigen Beaufschlagung mit Wind ist es möglich, dass eine oder mehrere Wellen der Turbomaschine in eine Drehung entgegengesetzt der bestimmungsgemäßen Drehung im Betrieb versetzt werden. Ein Start der Turbomaschine mit einer Kraftstoffzufuhr während dieser verkehrten Drehung kann zu einer Überhitzung und einer Beschädigung der Turbomaschine führen. So ist es bei starkem Wind möglich, dass eine Mindestdrehzahl der Turbomaschine vom Betrag her durch "wind milling" erreicht wird. Wird die bestimmungsgemäße Drehrichtung der Turbomaschine beim Starten von einem Benutzer der Turbomaschine nicht beachtet, etwa weil keine Drehrichtungsanzeige vorgesehen ist, kann es insbesondere zu einer Beschädigung eines Verdichters der Turbomaschine durch Überhitzung kommen.

Ferner können die bekannten induktiven Messungen je nach Einsatzort der Vorrichtung durch externe elektromagnetische Einflüsse gestört werden.

Weiter besteht in einigen Anwendungen, insbesondere bei Turbomaschinen, die Gefahr, dass das drehbare Bauteil mit einer zu hohen Rotationsgeschwindigkeit rotiert wird. Eine derartige Rotation wird auch als Überdrehzahl oder "Overspeed" bezeichnet. Durch eine Überdrehzahl können das drehbare Bauteil oder benachbarte Bauteile Schaden nehmen. Würde eine Überdrehzahl rechtzeitig erkannt, könnten geeignete Gegenmaßnahmen getroffen werden, um einen Schaden zu verhindern.

Die Überdrehzahl einer einen Kompressor mit einer Turbine verbindenden Welle einer Turbomaschine kann eine Folge eines Bruchs der Welle sein. Denn der bremsende Kompressor kann bei einem Wellenbruch nicht mehr bestimmungsgemäß von der Turbine angetrieben werden. Somit kann z.B. Restenergie in Verbrennungsgasen der Turbomaschine die Turbine weiter beschleunigen. Es ist daher wünschenswert, die Kraftstoffzufuhr so schnell wie möglich zu trennen, damit die Welle nicht weiter beschleunigt werden kann, bevor die Drehzahl der Welle eine von der Materialfestigkeit abhängende kritische Drehzahl übersteigt, bei der weitere Teile zerstört werden können.

Wenn das drehbare Bauteil bereits Schaden durch eine Überdrehzahl genommen hat, ist es wünschenswert, dies möglichst schnell zu erkennen, um mögliche Folgeschäden zu minimieren.

Es besteht die Aufgabe, eine verbesserte Turbomaschine mit einer Vorrichtung bereitzustellen, insbesondere mit einer Vorrichtung, die einen Bruch des drehbaren Bauteils (der Welle) erkennen kann. Die Aufgabe wird durch eine Turbomaschine mit den Merkmalen des Anspruchs 1 gelöst.

Die Turbomaschine umfasst zumindest einen zweiten Musterträger, der mindestens eine Musterstelle aufweist. Dabei sind beide Musterträger jeweils so mit dem drehbaren Bauteil, insbesondere der Welle der Turbomaschine, verbindbar oder verbunden, dass sie derart gemeinsam damit um eine Rotationsachse bezüglich dem Empfänger rotierbar sind, dass die zumindest eine Musterstelle des ersten Musterträgers in Deckung mit der zumindest einen Musterstelle des zweiten Musterträgers angeordnet ist. Der Empfänger ist ausgebildet und eingerichtet, zu erfassen, ob die Musterstelle des ersten Musterträgers in Deckung oder außer Deckung mit der Musterstelle des zweiten Musterträgers angeordnet ist. Zum Beispiel ist der Empfänger ausgebildet, ein Signal an eine Auswerteeinheit bereitzustellen, wenn die Musterstellen in Deckung liegen und/oder oder ein ggf. davon verschiedenes Signal, wenn die Musterstellen außer Deckung angeordnet sind.

Die Musterstelle des ersten Musterträgers und die Musterstelle des zweiten Musterträgers können im Wesentlichen dieselbe Form und/oder Größe aufweisen. Zum Beispiel liegt eine Deckung der Musterstelle des ersten Musterträgers und der Musterstelle des zweiten Musterträgers dann vor, wenn sich die Musterstellen zumindest teilweise, zumindest überwiegend oder vollständig überlappen oder überdecken. Die Musterstellen sind z.B. benachbart zueinander angeordnet.

Der Empfänger erfasst zum Beispiel einmal oder zweimal pro Umdrehung die in Deckung befindlichen Musterstellen der bezüglich dem Empfänger rotierbaren Musterträger. Daraus kann der Empfänger oder eine mit dem Empfänger verbundene Auswerteeinheit die Rotationsgeschwindigkeit und insbesondere einen Bruch des drehbaren Bauteils (der Welle) in einfacher Weise bestimmen.

Durch eine Rotation der Musterträger um die Rotationsachse ist zumindest eine Musterstelle dem Empfänger insbesondere periodisch zuwendbar und abwendbar. Der Empfänger ist ausgebildet und eingerichtet, eine ihm zugewandte Musterstelle zu erfassen, d.h. zu erfassen, ob ihm eine Musterstelle zugewandt ist oder nicht.

Gemäß einer Ausführungsvariante ist vorgesehen, dass einer der Musterträger an einer Antriebsseite des drehbaren Bauteils (der Welle) mit dem drehbaren Bauteil (der Welle) verbindbar oder verbunden ist. Die Antriebsseite des drehbaren Bauteils (der Welle) ist diejenige Seite oder derjenige Abschnitt des drehbaren Bauteils (der Welle), an der/dem das drehbare Bauteil (die Welle) (zur Rotation, insbesondere gegenüber dem Empfänger) angetrieben wird. Ist das drehbare Bauteil eine Welle einer Turbomaschine, so ist die Antriebsseite der Welle z.B. diejenige längsseitige Seite der Welle, die eine Turbine oder eine Turbinenstufe der Turbomaschine trägt. Der andere der Musterträger kann an einer Abtriebsseite des drehbaren Bauteils (der Welle) mit dem drehbaren Bauteil (der Welle) verbindbar oder verbunden sein. Die Abtriebsseite des drehbaren Bauteils (der Welle) ist zum Beispiel diejenige Seite oder derjenige Abschnitt des drehbaren Bauteils (der Welle), an der/dem das drehbare Bauteil (der Welle) ein weiteres Bauteil (zur Rotation) antreibt. Ist das drehbare Bauteil eine Welle einer Turbomaschine, ist die Abtriebsseite der Welle z.B. diejenige längsseitige Seite der Welle, die einen Verdichter oder eine Verdichterstufe der Turbomaschine trägt, insbesondere antreibt. Die Antriebsseite und die Abtriebsseite des drehbaren Bauteils (der Welle) sind z.B. entlang der Rotationsrichtung nebeneinander und/oder beabstandet zueinander angeordnet.

Die Musterträger sind z.B. derart mit dem drehbaren Bauteil (der Welle) verbindbar oder verbunden, dass die Musterstellen in Deckung zueinander liegen, wenn sich das drehbare Bauteil (die Welle) in einem normalen Betriebszustand befindet, und außer Deckung zueinander liegen, wenn sich das drehbare Bauteil (die Welle) in einem (vom Normalbetrieb abweichenden) überlasteten Betriebszustand befindet. Die Musterträger können so montiert sein, dass in einem normalen Betriebszustand des drehbaren Bauteils (der Welle) keine Relativbewegung zwischen den Musterträgern auftritt. Ein überlasteter Betriebszustand kann zu einer Torsion des drehbaren Bauteils (der Welle) führen und/oder gar zu dessen Bruch. Durch die antriebsseitige bzw. abtriebsseitige Verbindung der beiden Musterträger mit dem drehbaren Bauteil (der Welle) kommt es dabei zu einer Relativbewegung zwischen den Musterträgern, z.B. in Rotationsrichtung. Durch eine Relativbewegung zwischen den Musterträgern geraten die Musterstellen der Musterträger außer Deckung zueinander. Der Empfänger erfasst, dass die Musterstellen außer Deckung geraten sind. Die Auswerteeinheit kann ein Steuersignal ausgeben, durch welches das drehbare Bauteil (die Welle) abgebremst und/oder gestoppt wird. Beispielsweise bewirkt die Auswerteeinheit eine Drosselung oder einen Stopp einer Treibstoffzufuhr. Hierdurch können Schäden am drehbaren Bauteil (der Welle) und weiteren Bauteilen und/oder Folgeschäden minimiert oder verhindert werden.

Der erste Musterträger kann innerhalb des zweiten Musterträgers angeordnet sein. Der zweite Musterträger kann z.B. in Form einer Hohlwelle ausgebildet sein und/oder einen Teil des drehbaren Bauteils (der Welle) ausbilden. Optional bildet das drehbare Bauteil (die Welle) eine Komponente der Vorrichtung. Der Empfänger ist beispielsweise außerhalb des zweiten Musterträgers oder innerhalb des ersten Musterträgers angeordnet. Alternativ ist der Musterträger in Form einer Lochscheibe ausgebildet, insbesondere in Form einer koaxial zur Rotationsachse angeordneten Kreisscheibe. Handelt es sich bei dem drehbaren Bauteil z.B. um eine Welle einer Turbomaschine, sind die Empfänger beispielsweise an einer die Welle drehbar lagernden Statik der Turbomaschine festgelegt.

Die Musterstellen können sich (ggf. allesamt) im Wesentlichen parallel oder senkrecht zur Rotationsachse durch den Musterträger hindurch erstrecken, insbesondere derart, dass sich eine Gerade durch sie hindurch parallel bzw. senkrecht zur Rotationsachse erstrecken kann. Die Musterstellen sind z.B. jeweils in Form eines Lochs im jeweiligen Musterträger ausgebildet. Insbesondere wenn die Musterstellen als Löcher ausgebildet sind, können die Musterträger im Bereich der Musterstellen durchlässig für den Informationsträger sein. Zum Beispiel sind die Musterträger nur im Bereich der Musterstellen durchlässig für den Informationsträger. Die Löcher können jeweils mit derselben Größe oder mit unterschiedlicher Größe ausgebildet sein.

Die Musterträger können jeweils Paare von beiderseits der Rotationsachse gegenüberliegenden Musterstellen (z.B. Löchern) aufweisen.

Es kann vorgesehen sein, dass ein von den Musterstellen ausgehender und/oder durch die Musterstellen durchtretender Informationsträger (insbesondere nur dann) zum Empfänger vordringen kann, wenn die Musterstellen der Musterträger auf dem Weg des Informationsträgers zum Empfänger in Deckung zueinander angeordnet sind.

Der Empfänger kann ausgebildet und eingerichtet sein, einen aus einer (insbesondere ihm zugewandten) Musterstelle austretenden oder mit der Musterstelle wechselwirkenden Informationsträger zu erfassen. Der Informationsträger ist z.B. als (insbesondere elektromagnetische) Strahlung, als Massefluss und/oder als Schall ausgebildet, insbesondere als Lichtstrahlen (z.B. sichtbare Lichtstrahlen, infrarote Lichtstrahlen und/oder ultraviolette Lichtstrahlen), als Luftstrom und/oder als Ultraschall. Indem ein Empfänger den Informationsträger registriert, erfasst er, dass eine (insbesondere ihm zugewandte) Musterstelle des ersten Musterträgers in Deckung mit einer Musterstelle des zweiten Musterträgers liegt.

Der Empfänger umfasst gemäß einer Weiterbildung zumindest einen Sensor oder ist mit zumindest einem Sensor wirkverbunden. Der Sensor ist ausgebildet, den Informationsträger zu erfassen. Der Sensor ist insbesondere in Form eines optischen Sensors (z.B. in Form eines Photowiderstandes und/oder einer Photodiode), eines Masseflussmessers, eines Druckmessers und/oder eines Mikrofons ausgebildet. Es kann vorgesehen sein, dass jeder der Empfänger der Vorrichtung jeweils einen Sensor, z.B. einen optischen Sensor umfasst. Alternativ oder zusätzlich sind die Empfänger mit einem gemeinsamen Sensor wirkverbunden. Ein Sensor kann ein Signal erzeugen, das z.B. an die Auswerteeinheit bereitgestellt wird, die es verarbeiten kann.

Die Vorrichtung kann mindestens eine Sendeeinheit umfassen, die ausgebildet und eingerichtet ist, den Informationsträger (insbesondere in Richtung des Empfängers) auszusenden. Die Sendeeinheit umfasst z.B. zumindest eine Lichtquelle (z.B. eine Leuchtdiode oder Laserdiode), Luftdüse und/oder Schallquelle. Die Musterträger sind z.B. zwischen der mindestens einen Sendeeinheit und dem Empfänger angeordnet, insbesondere im Wesentlichen senkrecht oder parallel zur Rotationsachse. Alternativ oder zusätzlich ist eine Sendeeinheit am Musterträger angeordnet, insbesondere an den Musterstellen des Musterträgers. Weiter alternativ oder zusätzlich ist zumindest eine Sendeeinheit, etwa eine Lichtquelle, an zumindest einem Empfänger angeordnet. Beispielsweise dient als Musterstelle jeweils ein Spiegel.

Gemäß einer Ausführungsvariante weisen beide Musterträger jeweils mindestens zwei Musterstellen auf, wobei die Musterträger jeweils so mit dem drehbaren Bauteil (der Welle) verbindbar oder verbunden sein können, dass sie gemeinsam damit um eine Rotationsachse bezüglich dem Empfänger rotierbar sind, wobei jede Musterstelle des ersten Musterträgers in Deckung mit einer jeweils zugeordneten Musterstelle des zweiten Musterträgers liegt. Es können mindestens zwei Empfänger vorgesehen sein. Die Empfänger können beabstandet und/oder lagefest zueinander angeordnet sein. Jeder der Empfänger ist ausgebildet und eingerichtet, zu erfassen, ob eine Musterstelle des ersten Musterträgers in Deckung mit einer jeweils zugeordneten Musterstelle des zweiten Musterträgers angeordnet ist oder nicht.

Die mehreren Empfänger und/oder die mehreren Musterstellen (jedes Musterträgers) können jeweils untereinander entlang eines um die Rotationsachse umlaufenden Winkels versetzt zueinander angeordnet sein. Alternativ sind sowohl die Empfänger als auch die Musterstellen (jedes Musterträgers) jeweils untereinander entlang des um die Rotationsachse umlaufenden Winkels versetzt zueinander angeordnet, wobei die Musterstellen (jedes Musterträgers) einen Versatz aufweisen, der sich von einem Versatz der Empfänger unterscheidet. Der um die Rotationsachse umlaufende Winkel wird auch als Azimutwinkel oder Azimut bezeichnet.

Der Einsatz mehrerer Empfänger und/oder Musterstellen ermöglicht besonders präzise Messungen der Rotationsgeschwindigkeit des drehbaren Bauteils (der Welle). Ferner ermöglichen der Einsatz mehrerer Empfänger und der verschiedene Versatz der Empfänger und der Musterstellen die Messung einer Rotationsrichtung des drehbaren Bauteils (der Welle). Auch führt der Ausfall einer Musterstelle oder eines Empfängers nicht unmittelbar zum Ausfall einer Funktion der Vorrichtung.

Die einzelnen Empfänger und/oder die einzelnen Musterstellen jedes Musterträgers können in (radialer) Richtung senkrecht zur Rotationsachse und/oder in (axialer) Richtung parallel zur Rotationsachse versetzt (z.B. beabstandet) zueinander angeordnet sein. Es können ein oder mehrere Empfänger und/oder eine oder mehrere Musterstellen jeweils im Wesentlichen in demselben radialen Abstand zur Rotationsachse angeordnet sein. Hierdurch kann eine besonders hohe Messgenauigkeit erzielt werden.

Die mindestens zwei Musterstellen jedes Musterträgers können nach einem ersten Muster angeordnet sein und die mindestens zwei Empfänger nach einem zweiten Muster. Dabei ist das erste Muster insbesondere von dem zweiten Muster verschieden. Die Muster können sich jeweils in einer Ebene senkrecht zur Rotationsachse erstrecken. Die Musterstellen sind beispielsweise in einer entlang der Rotationsachse zu den Empfängern versetzten Ebene angeordnet. Die Empfänger können die Musterstellen in axialer Richtung erfassen. Alternativ erstrecken sich die Muster z.B. jeweils in einer um die Rotationsachse umlaufenden Ebene. Die Empfänger sind beispielsweise radial außerhalb der Musterstellen angeordnet. Die Empfänger können die Musterstellen in radialer Richtung erfassen. Zum Beispiel sind die Musterstellen entlang einer gebogenen Line als erstes Muster angeordnet und die Empfänger sind entlang einer geraden Linie als zweites Muster angeordnet. Jeweils genau drei oder mehr als drei (insbesondere ein Vielfaches von drei) Musterstellen (pro Musterträger) und genau drei oder mehr als drei Empfänger können vorgesehen sein.

Die Vorrichtung kann mindestens eine Antibeschlageinrichtung umfassen. Die Antibeschlageinrichtung richtet z.B. einen Fluidstrom, insbesondere einen Luftstrom, auf mindestens einen der Empfänger, insbesondere auf alle Empfänger und/oder auf zumindest eine oder alle Sendeeinheiten. Hierdurch kann ein Niederschlag, z.B. von flüssigen oder festen Schwebeteilchen, durch Kondensation und/oder durch Resublimation aus einem umgebenden Gas auf dem Empfänger (und/oder auf der Sendeeinheit) verhindert werden. So kann eine ungestörte Funktion der Vorrichtung ermöglicht werden. Zudem kann der Fluid-/Luftstrom Empfänger und/oder Sendeeinheiten kühlen, wodurch eine einwandfreie Funktion und/oder eine möglichst lange Lebensdauer gewährleistet werden kann.

Die Turbomaschine kann insbesondere in Form eines Flugzeugtriebwerks oder eines stationären Turbinenkraftwerks ausgebildet sein und eine oder mehrere Wellen und eine oder mehrere Vorrichtungen gemäß einer beliebigen hierin beschriebenen Ausführung umfassen. Als drehbares Bauteil der Vorrichtung dient dabei insbesondere die Welle der Turbomaschine, die z.B. eine Niederdruckwelle, eine Mitteldruckwelle und/oder eine Hochdruckwelle der Turbomaschine ist.

Mit Hilfe der Vorrichtung kann sowohl die Rotationsgeschwindigkeit als auch ggf. die Rotationsrichtung einer oder mehrerer Wellen der Turbomaschine verlässlich gemessen werden. Durch die Messung der Rotationsrichtung der Welle oder der Wellen der Turbomaschine können eine "wind -milling"-Situation erkannt und (bei Bedarf) vor der Zündung eine Korrektur der Rotationsrichtung vorgenommen werden, um eine Beschädigung zu verhindern. Ferner kann ein Wellenbruch verlässlich erkannt werden, sodass z.B. eine Kraftstoffzufuhr unterbrochen werden kann, bevor ein Folgeschaden eintritt.

Zumindest eine Vorrichtung kann im rückseitigen Endbereich einer Welle und/oder im Bereich einer Lagerstelle der Welle an der Turbomaschine angeordnet sein. An der Lagerstelle ist die Welle z.B. an einer Statik der Turbomaschine drehbar gelagert. Im Bereich der Lagerstellen sind eine Festlegung des Musterträgers der Vorrichtung an der Welle und der Empfänger an der Statik der Turbomaschine besonders gut zu integrieren.

Die Aufgabe wird auch durch ein Verfahren zur Messung einer Rotationsbewegung eines drehbaren Bauteils, insbesondere einer Welle einer Turbomaschine, insbesondere einer Rotationsgeschwindigkeit und/oder einer Rotationsrichtung, und/oder eines Betriebszustands des drehbaren Bauteils (der Welle), mit den Merkmalen des Anspruchs 14 gelöst.

Das Verfahren verwendet einen Empfänger und einen ersten Musterträger, wobei der Musterträger mindestens eine Musterstelle aufweist.

Dabei wird ein zweiter Musterträger vorgesehen, der mindestens eine Musterstelle aufweist, wobei die beiden Musterträger jeweils mit dem drehbaren Bauteil (der Welle) verbunden werden, sodass sie derart gemeinsam damit um eine Rotationsachse bezüglich dem Empfänger rotierbar sind, dass die Musterstelle des ersten Musterträgers in Deckung mit der Musterstelle des zweiten Musterträgers liegt, und wobei der Empfänger erfasst, ob die Musterstellen in Deckung zueinander liegen oder nicht.

Gemäß einer Weiterbildung des Verfahrens ist vorgesehen, dass anhand von durch den Empfänger erfassten Informationen ein überlasteter Betriebszustand und/oder ein Bruch des insbesondere als Welle ausgebildeten drehbaren Bauteils erkannt wird und ein Steuersignal an eine Triebwerkssteuerung ausgegeben wird, wenn ein überlasteter Betriebszustand und/oder Bruch erkannt wird.

Die von dem Empfänger erfassten Informationen enthalten z.B. eine Angabe darüber, ob die Musterstelle des ersten Musterträgers in Deckung mit der Musterstelle des zweiten Musterträgers liegt, oder nicht. Beispielsweise wird erkannt, dass ein überlasteter Betriebszustand und/oder ein Bruch vorliegt, wenn die Musterstellen nicht in Deckung liegen, insbesondere über einen vorbestimmten Zeitraum. Das Steuersignal kann beispielsweise eine Anweisung enthalten, eine Treibstoffzufuhr (insbesondere einer Turbomaschine, dem die Welle zugeordnet ist) zu reduzieren oder abzustellen.

Auf diese Weise ist es möglich, eine kritische Überdrehzahl der Welle zu verhindern und z.B. Folgeschäden zu vermeiden.

Im Zusammenhang mit den in den Figuren dargestellten Ausführungsbeispielen wird die Erfindung erläutert. Dabei zeigen
- Fig. 1: eine schematische Darstellung eines Flugzeugtriebwerkes als Ausführungsform einer Turbomaschine;
- Fig. 2A, 2B: schematische Darstellungen einer Vorrichtung zur Messung einer Rotationsbewegung eines um eine Rotationsachse drehbaren Bauteils in einer Querschnittsansicht senkrecht zur Rotationsachse;
- Fig. 3: eine schematische Darstellung einer Vorrichtung zur Messung einer Rotationsbewegung eines um eine Rotationsachse drehbaren Bauteils in einer Querschnittsansicht längs der Rotationsachse;
- Fig. 4: eine schematische Darstellung einer Vorrichtung zur Messung einer Rotationsbewegung eines um eine Rotationsachse drehbaren Bauteils in einer Querschnittsansicht längs der Rotationsachse;
- Fig. 5: eine schematische Darstellung eines in Form einer Lochscheibe ausgebildeten Musterträgers der Vorrichtung gemäß Fig. 4 in einer Draufsicht entlang der Rotationsachse;
- Fig. 6: eine schematische Darstellung einer Anordnung mehrerer Empfänger der Vorrichtung gemäß Fig. 4-5 in einer Draufsicht entlang der Rotationsachse;
- Fig. 7: eine schematische Darstellung beispielhafter Messwerte der Empfänger der Vorrichtung gemäß Fig. 4-6;
- Fig. 8: eine schematische Darstellung einer Antibeschlageinrichtung der Vorrichtungen gemäß Fig. 2-7; und
- Fig. 9: eine schematische Darstellung einer Vorrichtung zur Messung einer Rotationsbewegung eines um eine Rotationsachse drehbaren Bauteils in einer Querschnittsansicht längs der Rotationsachse.

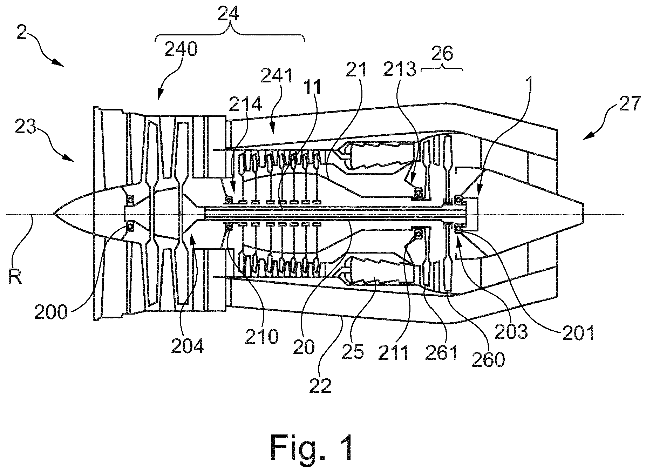

Fig. 1 zeigt eine Turbomaschine in der Ausführungsform eines Flugzeugtriebwerks 2 für ein Flugzeug. Das Flugzeugtriebwerk 2 umfasst mehrere, vorliegend zwei um eine gemeinsame Rotationsachse R drehbare Wellen 20, 21 als drehbare Bauteile. Die Wellen 20, 21 sind innerhalb eines Gehäuses 22 des Flugzeugtriebwerks 2 angeordnet. Das Gehäuse 22 definiert einen Lufteinlauf 23 des Flugzeugtriebwerks 2.

Durch den Lufteinlauf 23 strömt ein Luftstrom in das Flugzeugtriebwerk 2. Das Flugzeugtriebwerk 2 weist eine axiale Durchdurchströmungsrichtung auf. Die Durchdurchströmungsrichtung verläuft im Wesentlichen entlang der Rotationsachse R der Wellen 20, 21. Im Wesentlichen in Richtung der Durchdurchströmungsrichtung gesehen umfasst das Flugzeugtriebwerk 2 nach dem Lufteinlauf 23 einen Verdichter 24, eine Brennkammer 25, eine Turbine 26 und eine Düse 27.

Das Flugzeugtriebwerk 2 ist vorliegend zweistufig ausgeführt. Eine der Wellen 20, 21 dient als Niederdruckwelle 20, die andere als Hochdruckwelle 21. An der Niederdruckwelle 20 sind ein Niederdruckverdichter 240 des Verdichters 24 sowie eine Niederdruckturbine 260 der Turbine 26 festgelegt. An der Hochdruckwelle 21 sind ein Hochdruckverdichter 240 des Verdichters 24 sowie eine Hochdruckturbine 260 der Turbine 26 festgelegt.

Das Flugzeugtriebwerk 2 arbeitet in an sich bekannter Weise. Der Niederdruckverdichter 240 und der Hochdruckverdichter 241 verdichten den einlaufenden Luftstrom und führen ihn zur Verbrennung in die Brennkammer 25. Aus der Brennkammer 25 austretende heiße Verbrennungsgase werden in der Hochdruckturbine 261 und in der Niederdruckturbine 260 entspannt, bevor sie durch die Düse 27 austreten. Die Düse 27 sorgt für eine Restentspannung der austretenden heißen Verbrennungsgase und für eine Vermischung mit Sekundärluft. Dabei wird der austretende Luftstrom beschleunigt, wodurch Schub erzeugt wird.

Die Niederdruckturbine 260 treibt den Niederdruckverdichter 240 über die Niederdruckwelle 20 an. Die Hochdruckturbine 261 treibt den Hochdruckverdichter 241 über die Hochdruckwelle 21 an.

Beide Wellen 20, 21 sind über geeignete Lager 200, 201, 210, 211 gegenüber einer Triebwerksstatik um die Rotationsachse R drehbar gelagert. Die Triebwerksstatik ist fest mit dem Gehäuse 22 verbunden. Die Triebwerksstatik ist fest mit dem Flugzeug verbindbar.

Gemäß Fig. 1 weisen die Niederdruckwelle 20 und die Hochdruckwelle 21 an ihrem jeweiligen dem Lufteinlauf 23 zugewandten Ende ein vorderes Lager 200, 210 auf. Die vorderen Lager 200, 210 sind jeweils als Kugellager ausgebildet. An ihrem jeweiligen dem Luftauslass 27 zugewandten Ende umfassen die Niederdruckwelle 20 und die Hochdruckwelle 21 ein hinteres Lager 201, 211. Die hinteren Lager 201, 211 sind jeweils als Wälzlager ausgebildet.

Die Hochdruckwelle 21 ist als Hohlwelle ausgebildet. Die Niederdruckwelle 20 ist innerhalb der Hochdruckwelle 21 angeordnet.

Beide Wellen 20, 21 weisen jeweils eine Antriebsseite 203, 213 und eine Abtriebsseite 204, 214 auf. Die Antriebsseiten 203, 213 werden durch die jeweils zugeordneten Turbinenstufen 260, 261 angetrieben. Die Abtriebsseiten 204, 214 werden durch die jeweilige Antriebsseite 203, 213 angetrieben und treiben jeweils eine Verdichterstufe 240, 241 an.

Eine zu hohe Kraft zwischen einer oder beiden Antriebsseiten 203, 213 und einer oder beiden Abtriebsseiten 204, 214 kann zu einer zu starken Torsion und/oder zu Torsionsschwingungen einer oder beider Wellen 20, 21 führen oder gar zu einem Bruch.

Zur Bestimmung einer Rotationsbewegung der Niederdruckwelle 20, nämlich sowohl einer Rotationsgeschwindigkeit als auch einer Rotationsrichtung, und eines Betriebszustands umfasst das Flugzeugtriebwerk 2 eine in Fig. 1 lediglich schematisch dargestellte Vorrichtung 1. Die Vorrichtung 1 ist vorliegend im Bereich des hinteren Lagers 201 der Niederdruckwelle 20 angeordnet.

Zur Erkennung eines Wellenbruchs des Flugzeugtriebwerks 2 umfasst die Vorrichtung 1 einen ersten Musterträger 11, welcher vorliegend innerhalb der Niederdruckwelle 20 angeordnet ist und von der Abtriebsseite 204 der Niederdruckwelle 20 über eine feste Verbindung angetrieben wird.

Die Vorrichtung 1 wird anhand der nachfolgenden Figuren näher erläutert werden.

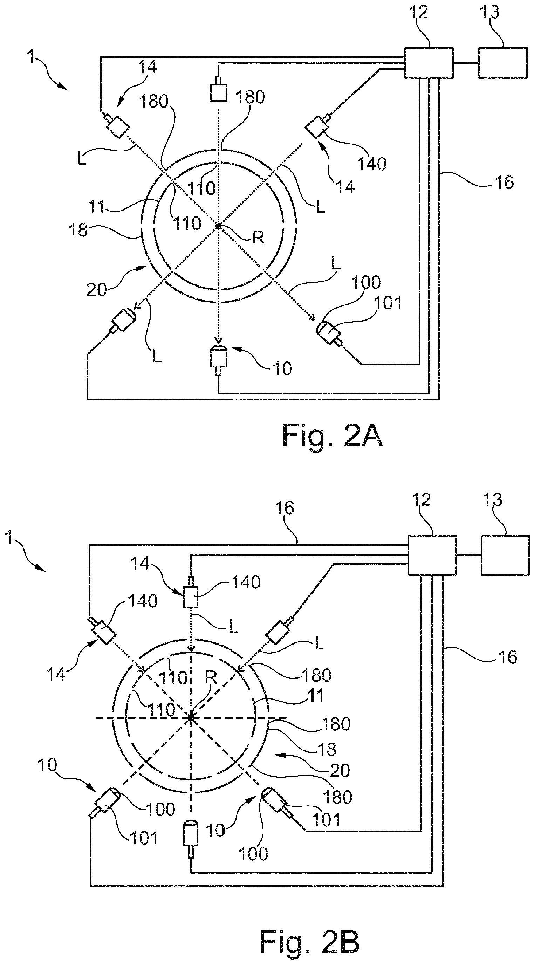

Gemäß Fig. 2A und 2B umfasst eine Vorrichtung 1 den ersten Musterträger 11, einen zweiten Musterträger 18, mehrere Empfänger 10 und mehrere Sendeeinheiten 14. Im gezeigten Ausführungsbeispiel umfasst die Vorrichtung 1 genau drei Empfänger 10 und genau drei Sendeeinheiten 14.

Der erste Musterträger 11 und der zweite Musterträger 18 sind koaxial zur Rotationsachse R angeordnet.

Der erste Musterträger ist innerhalb des zweiten Musterträgers 18 angeordnet. Der erste Musterträger 11 ist vorliegend in Form eines Hohlzylinders ausgebildet. Der erste Musterträger 11 drehfest mit der Niederdruckwelle 20 verbunden. Der erste Musterträger 11 ist derart an der Niederdruckwelle 20 angeordnet, dass er gemeinsam mit der Niederdruckwelle 20 um die Rotationsachse R rotierbar ist. Beispielsweise ist der erste Musterträger 11 einstückig mit der Niederdruckwelle 20 ausgebildet oder in geeigneter Weise daran befestigt, z.B. angeschraubt.

Der zweite Musterträger 18 bildet einen Wellenabschnitt der Niederdruckwelle 20. Der zweite Musterträger 18 bildet somit einen Teil des drehbaren Bauteils.

Einer der Musterträger 11, 18, nämlich vorliegend der zweite Musterträger 18, ist an der Antriebsseite 203 der Niederdruckwelle 20 an der Niederdruckwelle 20 ausgebildet. Der andere der Musterträger 11, 18, vorliegend der erste Musterträger 11, ist an der Abtriebsseite 204 der Niederdruckwelle 20 an der Niederdruckwelle 20 befestigt. Somit wird der zweite Musterträger 18 von der Antriebsseite 203 in Rotation um die Rotationsachse R versetzt, während der erste Musterträger 11 von der Abtriebsseite 204 in Rotation um die Rotationsachse R versetzt wird.

Sowohl im ersten als auch im zweiten Musterträger 11, 18 sind mehrere Musterstellen in Form von Löchern 110, 180 ausgebildet. Konkret sind in beiden Musterträgern 11, 18 mehrere Paare von jeweils bezüglich der Rotationsachse R gegenüberliegenden Musterstellen in Form von Löchern 110, 180 vorgesehen.

In einem normalen Betriebszustand der Flugzeugturbine 2 weisen die Wellen 20, 21 keine oder nur eine tolerierbare Torsion auf. Diesen Zustand zeigt Fig. 2A.

Im normalen Betriebszustand liegen die Löcher 110 des ersten Musterträgers 11 zumindest überwiegend, insbesondere vollständig in Deckung mit jeweils einem benachbarten Loch 180 des zweiten Musterträgers 18. Im normalen Betriebszustand der Flugzeugturbine 2 rotieren beide Musterträger 11, 18 gemeinsam um die Rotationsachse R, wobei die Löcher 11, 180 (allgemein die Musterstellen) in Deckung zueinander bleiben. Eine Beschleunigung der Niederdruckwelle 20 kann zur Folge haben, dass es zu einer Abweichung von einer insbesondere vollständigen Deckung der Löcher 110, 180, z.B. in einem stationären Zustand, kommt.

In einem überlasteten Betriebszustand werden die Wellen 20, 21 des Flugzeugtriebwerks 2 verdrillt (oder können gar reißen oder brechen). Diesen Zustand zeigt Fig. 2B.

Durch die antriebs- bzw. abtriebsseitige Festlegung der beiden Musterträger 11, 18 werden diese im überlasteten Betriebszustand gegeneinander um die Rotationsachse R verdreht. Hierdurch geraten Löcher 110, 180, die im normalen Betriebszustand noch in Deckung lagen, außer Deckung zueinander.

Den aktuellen Betriebszustand der Flugzeugturbine 2 ermittelt die Vorrichtung mittels der Empfänger 10 und der Sendeeinheiten 14.

Die Empfänger 10 umfassen vorliegend jeweils einen optischen Sensor 101, z.B. in Form jeweils eines Photowiderstandes und/oder einer Photodiode. Für eine effiziente Lichtausbeute ist jedem der Sensoren 101 jeweils eine Linse 100 vorgeschaltet, z.B. in Form jeweils einer Sammellinse.

Die Sendeeinheiten 14 umfassen jeweils eine Lichtquelle 140, z.B. in Form einer Leuchtdiode und/oder einer Laserdiode. Die Lichtquellen 140 senden Lichtstrahlen L als Informationsträger aus, welche von den Empfängern 10 erfasst werden können. Jede der Sendeeinheiten 14 und ein jeweils zugeordneter Empfänger 10 sind auf einander ausgerichtet. Lichtstrahlen werden nicht durch externe elektromagnetische Signale gestört und sind daher besonders gut als Informationsträger geeignet.

Die Empfänger 10 und die Sendeeinheiten 14 sind lagefest zueinander angeordnet, z.B. durch eine Befestigung an der Triebwerksstatik und/oder einem gemeinsamen Träger.

Zwischen den jeweils zugeordneten Sendeeinheiten 14 und Empfängern 10 sind die beiden Musterträger 11, 18 angeordnet. Die Sendeeinheiten 14 und Empfänger 10 sind in einer senkrecht zur Rotationsachse R erstreckten Ebene angeordnet, vorliegend am Umfang einer senkrecht zur Rotationsachse R erstreckten Kreisfläche. Gemäß Fig. 2A, 2B weisen die Sendeeinheiten 14 und die Empfänger 10 jeweils untereinander jeweils einen Versatz von etwa einem Achtelkreis auf. Alternativ kann auch ein anderer Versatz vorgesehen sein, z.B. ein Viertelkreis oder ein Halbkreis.

Die von den Sendeeinheiten 14 zu den zugeordneten Empfängern 10 hin ausgesandten Lichtstrahlen L verlaufen im Wesentlichen senkrecht zur Rotationsachse R. Die Lichtstrahlen L der Sendeeinheiten 14 schneiden die Rotationsachse R an einem gemeinsamen Punkt.

Die Löcher 110, 180 der beiden Musterträger 11, 18 liegen im Wesentlichen in derselben Ebene senkrecht zur Rotationsachse R wie die Sendeeinheiten 14 und Empfänger 10. Liegen die Löcher 110, 180 der beiden Musterträger 11, 18 in Deckung zueinander, so können die von den Sendeeinheiten 14 ausgesandten Lichtstrahlen L die Löcher 110, 180 passieren, wenn jeweils gegenüberliegende Paare von in Deckung liegenden Löchern 110, 180 zwischen den Sendeeinheiten 14 und Empfängern 10 angeordnet sind. Ansonsten verdeckt die Niederdruckwelle 20 die Lichtstrahlen L. Eine Rotation der Niederdruckwelle 20 führt so zu einem periodischen Signal bei jedem der Empfänger 10 mit einer von der Rotationsgeschwindigkeit abhängenden Frequenz. Vorliegend empfängt jeder Empfänger 10 pro Umdrehung der Niederdruckwelle 20 acht Mal ein Signal von der jeweils zugeordneten Sendeeinheit 14. Das Signal eines Empfängers 10 ist z.B. ein Rechtecksignal. Je nach der Form und Größe der Löcher 110, 180 kann das Signal auch im Wesentlichen sinusförmig sein.

Im überlasteten Betriebszustand liegen die Löcher 110, 180 außer Deckung zueinander (Fig. 2B). Dadurch können die Lichtstrahlen L der Sendeeinheiten 14 nicht zu den Empfängern 10 vordringen. Die Lichtstrahlen L werden jeweils entweder durch den ersten oder den zweiten Musterträger 11, 18 zumindest überwiegend blockiert. Die Empfänger 10 empfangen ein zumindest überwiegend geschwächtes oder kein Signal. Falls die Niederdruckwelle 20 bricht, es also zu einem Wellenbruch kommt, werden die Turbine 26 beschleunigen und der Kompressor 24 abbremsen. Hierdurch kommt es zu einer Relativbewegung zwischen den Musterträgern 11, 18. Die Löcher 110, 180 (oder allgemein die Musterstellen) der Musterträger 11, 18 geraten dadurch außer Deckung zueinander. Dies kann mittels der Vorrichtung 1 erkannt werden. Durch eine weitere Relativbewegung zwischen den Musterträgern können erneut Löcher 110, 180 in Deckung zueinander geraten. Die Vorrichtung 1 kann den Wellenbruch erkennen, bevor dies passiert.

Der erste Musterträger 11 dient somit als Referenz zum zweiten Musterträger 18. Der erste Musterträger 11 ist somit als Referenzrohr ausgebildet.

Die Sendeeinheiten 14 und die Empfänger 10 sind jeweils über geeignete elektrische Signalleitungen 16 mit einer Auswerteeinrichtung 12 der Vorrichtung 1 wirkverbunden. Die Auswerteeinrichtung 12 steuert die Sendeeinheiten 14. Die Empfänger 10 senden ihre Signale an die Auswerteeinrichtung 12. Die Auswerteeinrichtung 12 ist z.B. Form eines Mikroprozessors oder eines Computers ausgebildet. Insbesondere handelt es sich bei der Auswerteeinrichtung 12 um eine elektronische Triebwerkssteuerung (Electronic Engine Control, EEC) oder eine Triebwerksüberwachungseinheit (Engine Monitoring Unit, EMU) des Flugzeugtriebwerks 2.

Empfängt die Auswerteeinheit 12 über einen vorbestimmten Zeitraum nur ein überwiegend geschwächtes oder kein Signal von zumindest einem der Empfänger 10, erkennt sie, dass sich die Flugzeugturbine 2 im überlasteten Zustand befindet. Alternativ kann die Auswerteeinheit 12 erkennen, dass sich die Flugzeugturbine 2 im überlasteten Zustand befindet, wenn sie nur ein überwiegend geschwächtes oder kein Signal von zumindest zwei der Empfänger 10 empfängt. Die Detektion eines überlasteten Zustands kann im Millisekundenbereich erfolgen.

Erkennt die Auswerteeinheit 12 einen überlasteten Zustand, kann sie geeignete Maßnahmen treffen, z.B. eine Kraftstoffzufuhr in die Brennkammer 25 drosseln oder stoppen und/oder ein Warnsignal an einen Benutzer ausgeben.

Anhand der Frequenz der Signale der Empfänger 10 ermittelt die Auswerteeinheit 12 die Rotationsgeschwindigkeit der Niederdruckwelle 20. Zur Anzeige der ermittelten Rotationsgeschwindigkeit und des Betriebszustandes ist die Auswerteeinrichtung 12 mit einer Anzeigeeinheit 13 wirkverbunden.

Die Verwendung mehrerer Empfänger 10 und Sendeeinheiten 14 führt bei einem Ausfall von einem oder zwei der Empfänger 10 und/oder Sendeeinheiten 14 nicht zwingend zu einem Ausfall der Vorrichtung 1.

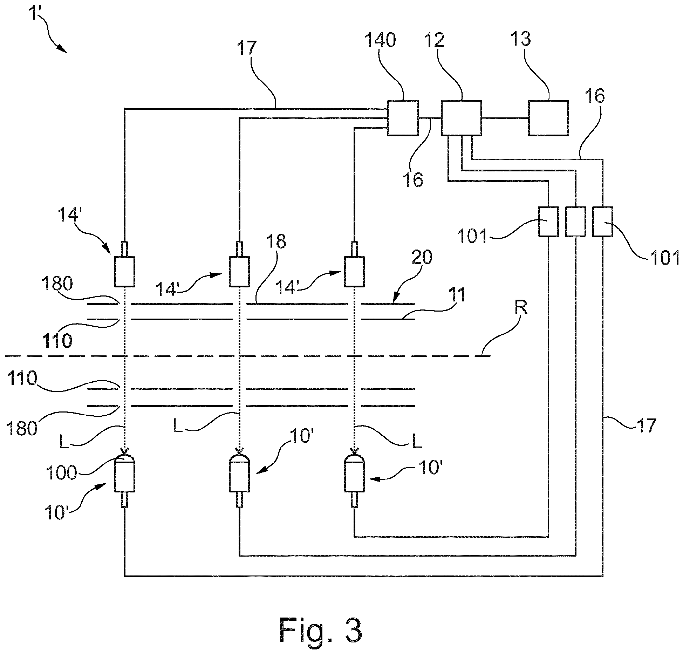

Fig. 3 zeigt eine weitere Vorrichtung 1' zur Messung der Rotationsbewegung des drehbaren Bauteils. Wie bei der Vorrichtung 1 gemäß Fig. 2A und 2B sind die Sendeeinheiten 14 und Empfänger 10 in einer die Rotationsachse R schneidenden Ebene angeordnet. Im Unterschied dazu erstreckt sich die Ebene mit einer Achse entlang der Rotationsachse R.

Die (vorliegend drei) Sendeeinheiten 14 sind im Wesentlichen parallel zueinander ausgerichtet. Die jeweils zu den Empfängern 10 hin ausgesandten Lichtstrahlen L verlaufen (zumindest teilweise) im Wesentlichen parallel zueinander. Die von den Sendeeinheiten 14 zu den Empfängern 10 hin ausgesandten Lichtstrahlen L verlaufen im Wesentlichen senkrecht zur Rotationsachse R und schneiden die Rotationsachse R (vorliegend an beabstandeten Punkten auf der Rotationsachse R).

Die Musterstellen in Form von Löchern 110, 180 der Musterträger 11, 18 sind so angeordnet, dass zumindest zwei Mal pro Umdrehung der Niederdruckwelle 20 jeweils gegenüberliegende Paare von in Deckung liegenden Löchern 110, 180 zwischen den Sendeeinheiten 14 und dem jeweils zugeordneten Empfänger 10 angeordnet sind.

Ein Unterschied zur Vorrichtung 1 gemäß Fig. 2A und 2B liegt darin, dass gemäß Fig. 3 keine optischen Sensoren direkt an den Empfängern 10' angeordnet sind. Stattdessen sammeln die Empfänger 10' die (über die Linse 100) einstrahlenden Lichtstrahlen L und leiten sie in jeweils einen Lichtwellenleiter 17, z.B. ein Glasfaserkabel. Die Lichtwellenleiter 17 sind mit jeweils einem optischen Sensor 101 verbunden. Die optischen Sensoren 101 sind beabstandet von den Empfängern 10 angeordnet. Beispielsweise sind die optischen Sensoren 101 benachbart zu der Auswerteeinheit 12 angeordnet und/oder in einem Bereich des Flugzeugtriebwerks 2, in dem eine niedrigere Temperatur herrscht als im Bereich der Empfänger 10 und/oder in einem Bereich, der nicht von Ölnebel der Flugzeugturbine 2 beaufschlagt wird.

Alternativ ist nur ein optischer Sensor 101 für alle Empfänger vorgesehen, dies kann insbesondere bei nicht sicherheitskritischen Anwendungen vorgesehen sein. Eine Zuordnung der Signale der einzelnen Empfänger kann durch eine Kodierung erfolgen, etwa eine Farbkodierung (z.B. durch unterschiedlich eingefärbte Komponenten der einzelnen Sendeeinheiten 14, Empfänger 10 und/oder Lichtwellenleiter 17).

Die Sendeeinheiten 14' gemäß Fig. 3 sind als Abstrahleinheiten ausgebildet, die jeweils über einen Lichtwellenleiter 17 mit einer beabstandet angeordneten Lichtquelle 140 verbunden sind. Mögliche Anordnungen der Lichtquelle 140 entsprechen den möglichen Anordnungen der optischen Sensoren 101. Z.B. ist die Lichtquelle 140 benachbart zu zumindest einem optischen Sensor 101 angeordnet. Alternativ ist jede Sendeeinheit 14' über den jeweiligen Lichtwellenleiter 17 mit einer separaten Lichtquelle verbunden.

Hinsichtlich der übrigen Funktion der Vorrichtung 1' gemäß Fig. 3 wird auf die obige Beschreibung im Zusammenhang mit Fig. 2A, 2B Bezug genommen.

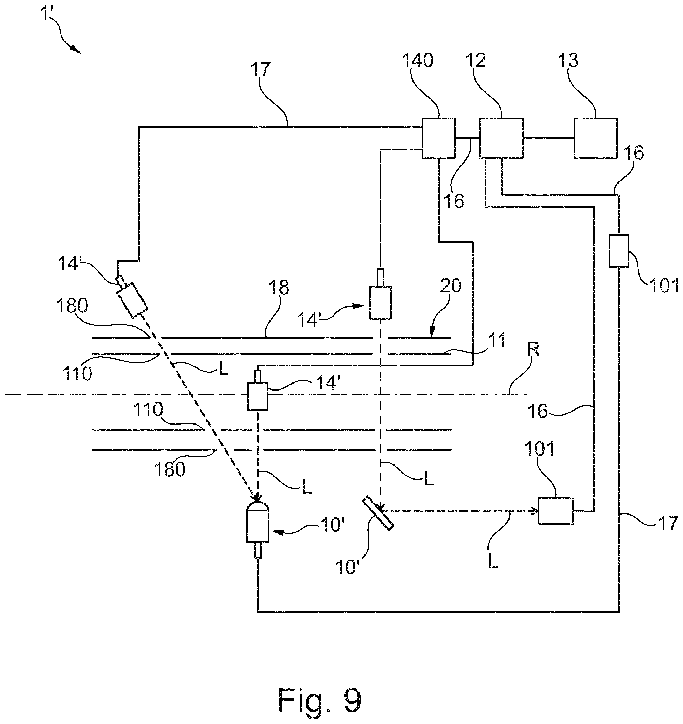

Alternativ oder zusätzlich zu den Anordnungen der Sendeeinheiten 14, 14' und der Empfänger 10, 10' gemäß Fig. 2A-2B und 3 ist es auch möglich, einen oder mehrere Sendeeinheiten 14, 14' und/oder Empfänger 10, 10' innerhalb der Musterträger 11, 18 anzuordnen, wie in Fig. 9 gezeigt.

Fig. 9 zeigt ferner, dass zwei Sendeeinheiten 14' auf einen gemeinsamen optischen Sensor 10' ausgerichtet sind. Die von den Sendeeinheiten 14' ausgesandten Lichtstrahlen L verlaufen schräg zueinander. Die Lichtstrahlen L weisen z.B. eine unterschiedliche Farbe auf. Die Löcher 110, 180 sind entlang der Lichtstrahlen L der Sendeeinheiten 14' angeordnet.

Fig. 9 zeigt weiter, dass ein Empfänger 10' auch als Spiegel ausgebildet sein kann. Der als Spiegel ausgebildete Empfänger 10' (in Fig. 9 der rechte Empfänger 10') leitet die Lichtstrahlen L der zugeordneten Sendeeinheit 14' an einen beabstandeten optischen Sensor 101. Hierdurch kann auf einen Lichtwellenleiter verzichtet werden.

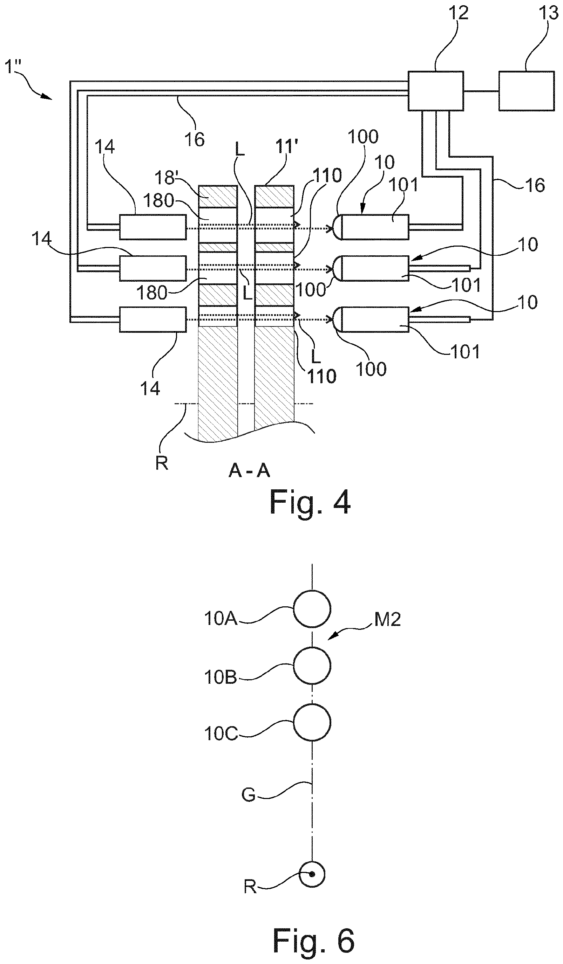

Fig. 4-6 zeigen eine Vorrichtung 1" mit jeweils in Form einer kreisförmigen Lochscheibe ausgebildeten Musterträgern 11', 18'. Die Vorrichtung 1" umfasst drei Empfänger 10 und drei jeweils einem der Empfänger 10 zugeordneten Sendeeinheiten 14.

Die Musterträger 11', 18' sind benachbart und parallel zueinander angeordnet. Die Musterträger 11', 18' sind konzentrisch zur Rotationsachse R angeordnet.

Der zweite Musterträger 18' ist an der Antriebsseite 203 der Niederdruckwelle 20 an der Niederdruckwelle 20 befestigt. Der erste Musterträger 11' ist an der Abtriebsseite 204 der Niederdruckwelle 20 an der Niederdruckwelle 20 befestigt.

Die Empfänger 10 und die Sendeeinheiten 14 entsprechen den im Zusammenhang mit der Vorrichtung 1 gemäß Fig. 2A und 2B beschriebenen Empfängern 10 und Sendeeinheiten 14.

Die Sendeeinheiten 14 sind im Wesentlichen parallel zueinander ausgerichtet. Die jeweils zu den Empfängern 10 hin ausgesandten Lichtstrahlen L verlaufen (zumindest teilweise) im Wesentlichen parallel zueinander. Die von den Sendeeinheiten 14 zu den Empfängern 10 hin ausgesandten Lichtstrahlen L verlaufen im Wesentlichen parallel zur Rotationsachse R.

Zwischen den Sendeeinheiten 14 und den Empfängern 10 sind die Musterträger 11', 18' angeordnet. Die Musterträger 11', 18' sind um die Rotationsachse R rotierbar.

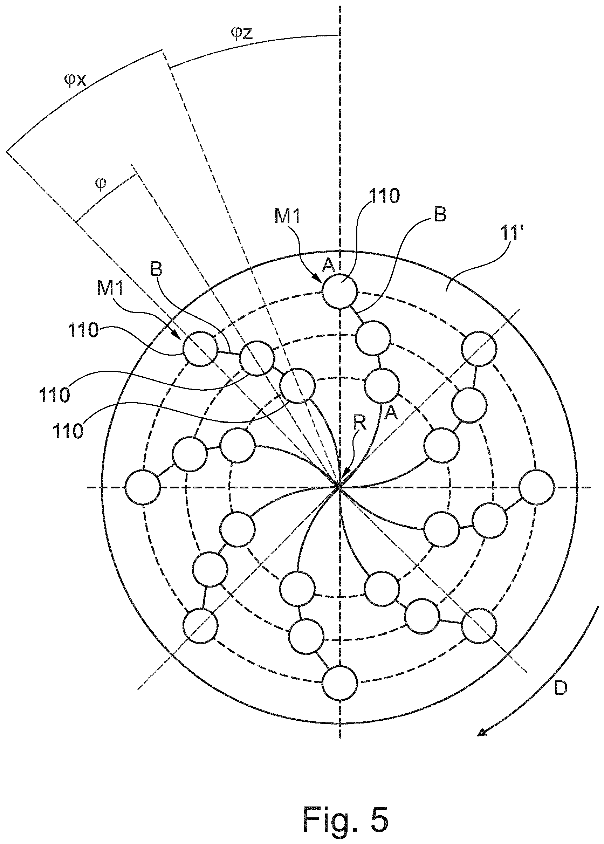

Wie insbesondere in Fig. 5 veranschaulicht, sind im ersten Musterträger 11' mehrere Musterstellen in Form von durchgehenden Löchern 110 vorgesehen. Die Löcher 110 erstrecken sich im Wesentlichen parallel zu den von den Sendeeinheiten 14 zu den Empfängern 10 hin ausgesandten Lichtstrahlen L durch die Lochscheibe 11. Jedes der Löcher 110 ist genau einem der Empfänger 10 zugeordnet. Die Löcher 110 sind kreisförmig ausgebildet und weisen jeweils im Wesentlichen dieselbe Größe auf.

Der zweite Musterträger 18' weist im Wesentlichen dieselbe Anordnung von Musterstellen in Form von Löchern 180 auf, wie der erste Musterträger 11'. Im normalen Betriebszustand des drehbaren Bauteils liegen die Löcher 110 des ersten Musterträgers 11' in Deckung mit den Löchern 180 des zweiten Musterträgers 18'.

Ist ein Paar von in Deckung liegenden Löchern 110, 180 zwischen der zugeordneten Sendeeinheit 14 und dem zugeordneten Empfänger 10 angeordnet (durch eine entsprechende Lage durch Rotation der Musterträger 11', 18'), können die von der Sendeeinheit ausgesandten Lichtstrahlen L durch die Löcher 110, 180 hindurchtreten. Die Sendeeinheit 14, die Löcher 110, 180 und der Empfänger 10 sind dann im Wesentlichen auf einer parallel zur Rotationsachse R verlaufenden Geraden angeordnet. Auf der der Sendeeinheit 14 gegenüberliegenden Seite der Musterträger 11', 18' treten die Lichtstrahlen L aus den Löchern 110, 180 aus und werden vom Empfänger 10 erfasst.

Ist kein Paar von in Deckung liegenden Löchern 110, 180 zwischen der zugeordneten Sendeeinheit 14 und dem zugeordneten Empfänger 10 angeordnet, können die Lichtstrahlen L der Sendeeinheit 14 die Musterträger 11', 18' nicht passieren. Der zugeordnete Empfänger 10 erfasst die Lichtstrahlen L dann nicht.

Jeweils drei Löcher 110, 180 der Musterträger 11', 18' sind gemäß einem ersten Muster M1 zueinander angeordnet. Das erste Muster M1 beschreibt eine gebogene Linie B. Somit sind jeweils drei Löcher 110, 180 entlang der gebogenen Linie B angeordnet. Die gebogene Linie B schneidet die Rotationsachse R. Vorliegend ist die gebogene Linie B beispielhaft in Form eines Kreisbogens ausgebildet.

Das erste Muster M1 wiederholt sich entlang eines senkrecht zur Rotationsachse R um die Rotationsachse R umlaufenden Azimuts mehrmals, vorliegend acht Mal. An mehreren (vorliegend drei) verschiedenen Radien zur Rotationsachse R ist jeweils eine Vielzahl von (vorliegend jeweils acht) Löchern 110, 180 kreisförmig angeordnet. Die Kreise aus Löchern 110, 180 sind entlang dem Azimut versetzt zueinander angeordnet.

Jeweils zwei einem gemeinsamen ersten Muster M1 zugeordnete (also auf einer gemeinsamen gebogenen Linie B beabstandet zueinander angeordnete) Löcher 110, 180 sind entlang dem Azimut um einen Azimuntwinkel ϕ versetzt zueinander angeordnet. Ein Versatz entlang des Azimuts zwischen zwei benachbarten, demselben ersten Muster M1 zugeordneten Löchern 110, 180 entspricht z.B. in etwa bis zu einem Zehntel eines Durchmessers oder einem Zehntel eines Durchmessers bis zu einem Durchmesser jener Löcher 110, insbesondere weniger als der Hälfte eines Durchmessers oder etwa einem Viertel bis der Hälfte eines Durchmessers jener Löcher 110, 180.

Es kann vorgesehen sein, dass alle Löcher 110, die einem gemeinsamen ersten Muster M1 zugeordnet sind, jeweils etwa um denselben Azimutwinkel ϕ versetzt zueinander angeordnet sind. Alternativ sind die Azimutwinkel ϕ verschieden. Beispielsweise ist der Azimutwinkel ϕ zwischen dem radial äußeren Loch 110 und dem radial mittleren Loch 110 größer oder kleiner als der Azimutwinkel zwischen dem radial mittleren Loch und dem radial inneren Loch 110.

Wie in Fig. 5 dargestellt, überspannen die Löcher 110 eines ersten Musters M1 insgesamt einen Azimutwinkel ϕₓ (wobei der Azimutwinkel vorliegend auf die Mittelpunkte der Löcher 110 bezogen ist). Dieser Winkel ϕₓ kann auch als Musterbreite ϕₓ bezeichnet werden. Die Musterbreite ϕₓ ist größer als der Azimutwinkel ϕ, um den zwei entlang des Azimuts benachbarte Löcher 110 (oder allgemein zwei entlang des Azimuts benachbarte Musterstellen) versetzt zueinander angeordnet sind: ϕₓ > ϕ.

Zwei benachbarte erste Muster M1 können (wie in Fig. 5 gezeigt) entlang dem Azimut um einen Azimuntwinkel ϕ_{z} versetzt zueinander angeordnet sein. Der Azimutwinkel ϕ_{z} kann auch als Musterabstand ϕ_{z} bezeichnet werden. Der Musterabstand ϕ_{z} ist größer als die Musterbreite ϕₓ: ϕ_{z} > ϕₓ.

Fig. 4 zeigt eine Ansicht gemäß einem in Fig. 5 eingezeichneten Schnitt A-A entlang einer gebogenen Linie B. Bei entsprechender Ausrichtung der Lochscheibe 11 können Lichtstrahlen L jeder der Sendeeinheiten 14 durch ein zugeordnetes Loch 110 durchtreten und vom zugeordneten Empfänger 10 erfasst werden.

Wie Fig. 6 veranschaulicht, sind die vorliegend drei Empfänger 10 der Vorrichtung 1" gemäß einem zweiten Muster M2 angeordnet. Das zweite Muster M2 unterscheidet sich von dem ersten Muster M1. Vorliegend beschreibt das zweite Muster M1 eine gerade Linie G. Die gerade Linie G schneidet die Rotationsachse R.

Die (vorliegend drei) gemäß dem zweiten Muster M2 angeordneten Empfänger 10 sind im Wesentlichen in denselben radialen Abständen zur Rotationsachse R angeordnet wie die einem gemeinsamen ersten Muster M1 zugeordneten, vorliegend in Form von Löchern 110, 180 ausgebildeten Musterstellen.

Durch eine Rotation der Musterträger 11', 18' um die Rotationsachse R sin die in Deckung liegenden Löcher 110, 180 mit der zugeordneten Sendeeinheit 14 und dem zugeordneten Empfänger 10 sukzessive in Deckung bringbar. Befinden sich die Löcher 110, 180 mit der zugeordneten Sendeeinheit 14 und dem zugeordneten Empfänger 10 in Deckung oder auf einer Geraden, können die von der Sendeeinheit 14 ausgesandten Lichtstrahlen L durch die Löcher 110, 180 hindurch- und auf der dem Empfänger 10 zugewandten Seite der Löcher 110, 180 austreten. Der Empfänger 10 kann die aus den zugeordneten Löchern 110, 180 austretenden Lichtstrahlen L erfassen.

Die Musterträger 11', 18' sind abgesehen von den Löchern 110 lichtundurchlässig (bzw. allgemein im Wesentlichen undurchlässig für den Informationsträger). Befinden sich keine Löcher 110, 180 zumindest teilweise in Deckung mit dem Empfänger 10, kann der Empfänger 10 die von der zugeordneten Sendeeinheit 14 ausgesandten Lichtstrahlen L nicht erfassen.

Eine Rotation der Musterträger 11', 18' um die Rotationsachse R bezüglich der Sendeeinheiten 14 und der Empfänger 10 bringt die Löcher 110, 180 eines gemeinsamen ersten Musters M1 zeitlich versetzt in Deckung mit ihren jeweils zugeordneten Sendeeinheiten 14 und Empfängern 10. Die Empfänger 10 senden Signale S1-S3 an die Auswerteeinrichtung 12

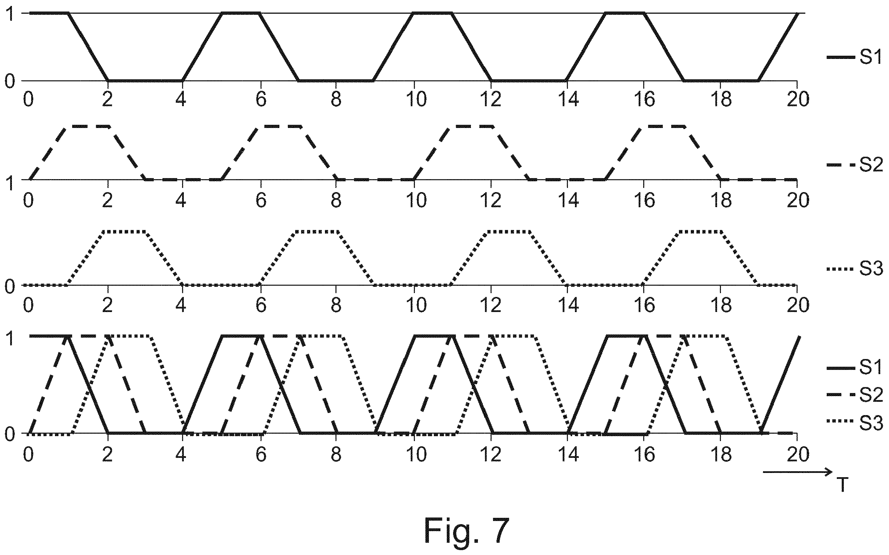

Fig. 7 zeigt schematisch den zeitlichen Verlauf der Signale S1-S3 der drei in Fig. 4 und 6 gezeigten Empfänger 10 bei einer Rotation der Die Empfänger 10 senden Signale S1-S3 an die Auswerteeinrichtung 12 um die Rotationsachse R entlang einer in Fig. 5 eingezeichneten Drehrichtung D (im Uhrzeigersinn) im normalen Betriebszustand. Dabei ist auf der x-Achse die Zeit T aufgetragen und die y-Achse zeigt jeweils die Signalstärke der Signale S1-S3.

Ein erstes Signal S1 stammt von dem radial inneren Empfänger 10. Ein zweites Signal S2 stammt von dem radial mittleren Empfänger 10. Ein drittes Signal S3 stammt von dem radial äußeren Empfänger 10.

Sobald in Deckung liegende Löcher 110, 180 durch die Rotation der Musterträger 11', 18' zwischen das zugeordnete Paar aus Sendeeinheit 14 und Empfänger 10 gerät, beginnt der Empfänger 10 Lichtstrahlen L der Sendeeinheit 14 zu empfangen und sendet ein von Null verschiedenes Signal S1-S3. Das Signal S1-S3 steigt entlang einer ansteigenden Flanke an, bis die Löcher 110, 180 in größtmöglicher Deckung mit dem Empfänger 10 liegen. Die Lichtstrahlen L sind im gezeigten Beispiel enger gebündelt als der Durchmesser der Löcher 110, 180, sodass das Signal S1-S3 über einen Zeitraum etwa konstant auf einem Maximalwert bleibt. Sobald die Deckung der Löcher 110, 180 mit dem Empfänger 10 durch eine weitere Rotation der Musterträger 11', 18' wieder abnimmt, sinkt das Signal S1-S3 bis auf Null. Sobald die nächsten, in Deckung befindlichen Löcher 110, 180 beim Empfänger 10 ankommen, beginnt eine neue Periode des Signalverlaufs. Die Anzahl an Perioden pro Zeiteinheit bestimmt die Frequenz der Signale S1-S3. Im unteren Bereich der Fig. 7 sind die Signale S1-S3 der drei Empfänger 10 übereinandergelegt dargestellt. Die Rotation der Musterträger 11', 18' entlang der Drehrichtung D führt dazu, dass zuerst das erste Signal S1 ansteigt, dann das zweite Signal S2 und dann das dritte Signal S3.

Da sich die Löcher 110 gemäß Fig. 5 entlang des Azimuts teilweise überschneiden, können die Signale S1-S3 benachbarter Löcher 110 zum gleichen Zeitpunkt von Null verschieden sein. Hierzu kann z.B. auch Streulicht von einem Rand eines Lochs 110 betragen.

Wie anhand von Fig. 7 klar wird, weisen benachbarte erste Muster M1 einen solchen Musterabstand ϕ_{z} auf, dass die Signale S1-S3 aller Empfänger 10 zwischen den ersten Mustern M1 auf im Wesentlichen Null sinken. Es ist eine Signalpause der Signale S1-S3 aller Empfänger 10 zwischen zwei benachbarten ersten Mustern M1 ausgebildet. In der Signalpause nimmt keines der Signale S1-S3 der Empfänger 10 seinen Maximalwert an. Die Signalpause ist länger als der Abstand zwischen dem Übergang zwischen dem Maximalwert und der abfallenden Flanke des ersten Signals S1 und dem Übergang zwischen der ansteigenden Flanke und dem Maximalwert des dritten Signals S3.

Falls der mittlere Empfänger 10 ausfällt, kann durch die vorgesehene Signalpause auch anhand lediglich der Signale S1 und S3 des radial inneren und des radial äußeren Empfängers 10 noch die Rotationsrichtung bestimmt werden. Die Empfänger 10 können beliebig um die Rotationsachse R angeordnet werden, solange sichergestellt ist, dass eine Differenzierung der Empfänger 10 über das zeitliche Signal S1-S3 möglich ist.

Die Auswerteeinrichtung 12 analysiert die von den Empfängern 10 empfangenen Signale S1-S3. Anhand der Frequenz der Signale S1-S3 ermittelt die Auswerteeinheit 12 die Rotationsgeschwindigkeit der Musterträger 11', 18' und damit der Niederdruckwelle 20 (allgemein des damit verbundenen drehbaren Bauteils). Optional bestimmt die Auswerteeinrichtung 12 jeweils die Frequenz der einzelnen Signale S1-S3 und berechnet den Mittelwert der Frequenzen. Eine Mittelwertbildung kann die Messgenauigkeit erhöhen.

Anhand der Reihenfolge der Perioden der einzelnen Signale S1-S3 ermittelt die Auswerteeinrichtung 12 die Rotationsrichtung der Musterträger 11', 18' und damit der Niederdruckwelle 20 (allgemein des damit verbundenen drehbaren Bauteils). Würde die Signalstärke des dritten Signals S3 vor der Signalstärke des zweiten und des ersten Signals S2, S1 ansteigen, würde die Auswerteeinrichtung 12 ermitteln, dass die Lochscheibe 11 entgegen der Drehrichtung D rotiert (entgegen des Uhrzeigersinns).

Im überlasteten Betriebszustand geraten die Löcher 110, 180 wie bei den Vorrichtungen 1, 1" gemäß Fig. 2-3 außer Deckung zueinander. Dadurch werden die Lichtstrahlen L jeweils entweder durch den ersten oder den zweiten Musterträger 11', 18' zumindest überwiegend blockiert. Die Empfänger 10 empfangen ein zumindest überwiegend geschwächtes oder kein Signal.

Beispielhafte Möglichkeiten einer Anordnung der Musterträger 11', 18' an der Niederdruckwelle 20 oder an der Hochdruckwelle 21 umfassen die Anordnung an einem axialen Ende der Welle 20, 21 und innerhalb der Welle 20, 21.

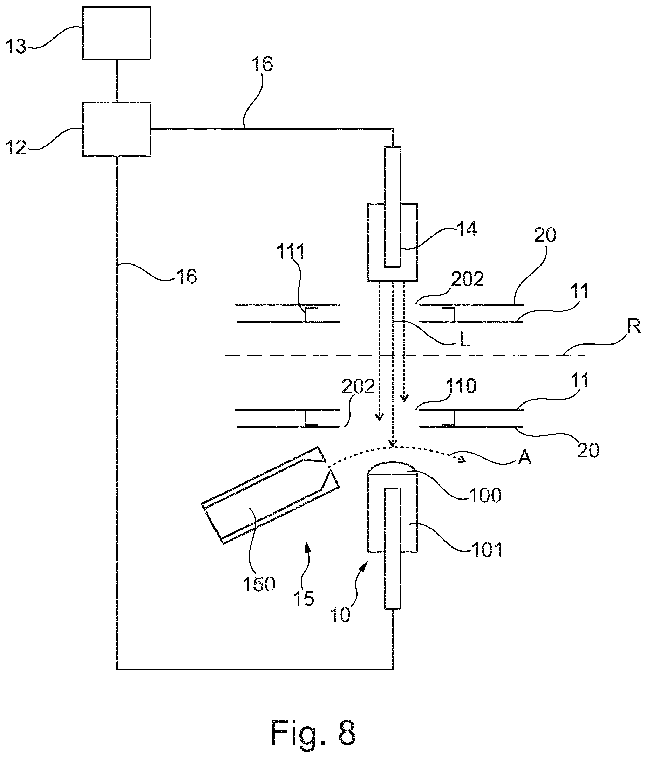

Fig. 8 zeigt eine in den Fig. 1-7 nicht dargestellte Antibeschlageinrichtung 15 der Vorrichtung 1, 1', 1" mit einer Luftdüse 150. Die Luftdüse 150 ist benachbart zu einem oder mehreren der Empfänger 10 angeordnet.

Die Luftdüse 150 bläst einen Luftstrom A über den oder die Empfänger 10, konkret über die Linse 100 des oder der Empfänger 10. Der Luftstrom A hindert Schwebeteilchen aus dem den Empfänger 10 umgebenden Gas daran, sich an der Linse 100 abzulagern, insbesondere einen Ölnebel der Flugzeugturbine 2. Der Luftstrom A verhindert ferner eine Kondensation und/oder Resublimation von Bestandteilen des den Empfänger 10 umgebenden Gases an der Linse 100. Somit verhindert die Luftdüse 150 ein Beschlagen der Linse 100 zumindest überwiegend, sodass die Funktion des Empfängers 10 im Wesentlichen nicht durch ein Beschlagen beeinträchtigt wird.

Optional können Luftleitbleche und/oder Strömungskanäle im Bereich des Luftstroms A vorgesehen sein. Hierdurch kann ein Einfluss durch mitgerissenen Ölnebel (nach der Art einer "jet pump", Strahlpumpe) unterbunden oder zumindest minimiert werden.

Optional ist die Luftdüse 150 einstellbar (z.B. hinsichtlich der Blasrichtung des Luftstroms A und/oder der Stärke des Luftstroms A) und hierzu z.B. mit der Auswerteeinrichtung 12 wirkverbunden und von der Auswerteeinrichtung 12 steuerbar. Es kann eine gemeinsame Luftdüse 150 für alle Empfänger 10 bereitgestellt werden. Alternativ wird jeweils eine Luftdüse 150 für jeden der Empfänger 10 bereitgestellt. Ebenso können eine oder mehrere Luftdüsen 150 für eine Sendeeinheit 14 oder mehrere Sendeeinheiten 14 vorgesehen werden.

Als Luft für den Luftstrom A dient z.B. Zapfluft, auch als Bleed Air bezeichnet. Die Luft für den Luftstrom A wird z.B. einer Verdichterstufe 240, 241 entnommen und der Luftdüse 150 zugeführt. Die Luft für den Luftstrom A wird insbesondere mit einem Überdruck bereitgestellt.

Zwischen dem ersten und dem zweiten Musterträger 11, 18 sind (insbesondere umlaufende) Versteifungen 111 vorgesehen, durch die der zweite Musterträger 18 versteift wird. Durch die Versteifungen 111 kann für den zweiten Musterträger ein besonders dünnes Material verwendet werden. Zusätzlich begrenzen die Versteifungen 111 radiale Bewegungen der Niederdruckwelle nach einem Wellenbruch. Somit kann die Gefahr, dass Lagerstellen ausschlagen, reduziert werden.

Anhand der vorstehenden Ausführungsbeispiele wurde die Flugzeugturbine 2 beispielhaft mit einer Vorrichtung 1, 1', 1" beschrieben. Die Flugzeugturbine 2 kann jedoch auch mehr als eine Vorrichtung 1, 1', 1" umfassen, insbesondere eine Vorrichtung 1, 1', 1" pro Welle 20, 21 und/oder eine Vorrichtung 1, 1', 1" an jedem Lager 200, 201, 210, 211.

Bei der Vorrichtung gemäß Fig. 2A und 2B sind die Sendeeinheiten 14 und Empfänger 10 entlang des Azimuts um die Rotationsachse R zueinander versetzt angeordnet. Bei der Vorrichtung gemäß Fig. 3 sind die Sendeeinheiten 14' und Empfänger 10' entlang der Rotationsachse R zueinander versetzt angeordnet. Selbstverständlich ist auch eine Kombination derart möglich, dass die Sendeeinheiten 14, 14' und/oder Empfänger 10, 10' sowohl entlang des Azimuts um die Rotationsachse R als auch entlang der Rotationsachse R zueinander versetzt angeordnet sind.

### Bezugszeichenliste

- 1, 1', 1": Vorrichtung
- 10, 10': Empfänger
- 100: Linse
- 101: optischer Sensor
- 11, 11': erster Musterträger
- 110: Loch (Musterstelle)
- 111: Versteifung
- 12: Auswerteeinrichtung
- 13: Anzeigeeinheit
- 14, 14': Sendeeinheit
- 140: Lichtquelle
- 15: Antibeschlageinrichtung
- 150: Luftdüse
- 16: elektrische Signalleitung
- 17: Lichtwellenleiter
- 18, 18': zweiter Musterträger
- 180: Loch (Musterstelle)
- 2: Flugzeugtriebwerk
- 20: Welle (Niederdruckwelle)
- 200, 201: Lager
- 203: Antriebsseite
- 204: Abtriebsseite
- 21: Welle (Hochdruckwelle)
- 210, 211: Lager
- 213: Antriebsseite
- 214: Abtriebsseite
- 22: Gehäuse
- 23: Lufteinlauf
- 24: Verdichter
- 240: Niederdruckverdichter
- 241: Hochdruckverdichter
- 25: Brennkammer
- 26: Turbine
- 260: Niederdruckturbine
- 261: Hochdruckturbine
- 27: Düse
- A: Luftstrom
- B: gebogene Linie
- D: Drehrichtung
- ϕ: Azimutwinkel
- G: gerade Linie
- L: Lichtstrahlen
- M1: erstes Muster
- M2: zweites Muster
- R: Rotationsachse
- S1-S3: Signal
- T: Zeit

## Patentansprüche

1. Turbomaschine mit mindestens einer drehbaren Welle und mindestens einer Vorrichtung (1, 1', 1") zur Messung einer Rotationsbewegung eines drehbaren Bauteils (20, 21), insbesondere der Welle, wobei die Vorrichtung einen Empfänger (10, 10') und einen ersten Musterträger (11, 11'), der mindestens eine Musterstelle (110) aufweist, umfasst,
**dadurch gekennzeichnet, dass**
die Vorrichtung (1, 1', 1") einen zweiten Musterträger (18, 18') mit mindestens einer Musterstelle (180) umfasst, wobei die Musterträger (11, 11', 18, 18') jeweils mit dem drehbaren Bauteil (20, 21) verbindbar oder verbunden sind, sodass sie derart gemeinsam damit um eine Rotationsachse (R) bezüglich dem Empfänger (10, 10') rotierbar sind, dass die Musterstelle (110) des ersten Musterträgers (11, 11') in Deckung mit der Musterstelle (180) des zweiten Musterträgers (18, 18') liegt, und wobei der Empfänger (10, 10') ausgebildet und eingerichtet ist, zu erfassen, ob die Musterstellen (110, 180) in Deckung liegen oder nicht.

2. Turbomaschine nach Anspruch 1, **dadurch gekennzeichnet, dass** einer der Musterträger (18, 18') an einer Antriebsseite (203, 213) des drehbaren Bauteils (20, 21) und der andere der Musterträger (11, 11') an einer Abtriebsseite (204, 214) des drehbaren Bauteils (20, 21) mit dem drehbaren Bauteil (20, 21) verbindbar oder verbunden sind.

3. Turbomaschine nach Anspruch 1 oder 2, **dadurch gekennzeichnet, dass** die Musterträger (11, 11', 18, 18') derart mit dem drehbaren Bauteil (20, 21) verbindbar oder verbunden sind, dass die Musterstellen (110, 180) in Deckung zueinander liegen, wenn sich das drehbaren Bauteil (20, 21) in einem normalen Betriebszustand befindet, und außer Deckung zueinander liegen, wenn sich das drehbaren Bauteil (20, 21) in einem überlasteten Betriebszustand befindet.

4. Turbomaschine nach einem der vorhergehenden Ansprüche, **dadurch gekennzeichnet, dass** der erste Musterträger (11, 11') innerhalb des zweiten Musterträgers (18, 18') angeordnet ist, wobei der zweite Musterträger insbesondere einen Teil des drehbaren Bauteils (20, 21) ausbildet.

5. Turbomaschine nach einem der vorhergehenden Ansprüche, **dadurch gekennzeichnet, dass** sich die Musterstellen (110, 180) im Wesentlichen parallel oder senkrecht zur Rotationsachse (R) durch den Musterträger (11) hindurch erstrecken, insbesondere jeweils in Form eines Lochs.

6. Turbomaschine nach einem der vorhergehenden Ansprüche, **dadurch gekennzeichnet, dass** ein Informationsträger (L) von den Musterstellen (110, 180) oder durch die Musterstellen (110, 180) hindurch zum Empfänger (10, 10') gelangen kann, wenn die Musterstellen (110, 180) in Deckung zueinander liegen, wobei insbesondere der Empfänger (10, 10') ausgebildet und eingerichtet ist, den Informationsträger (L) zu erfassen, wobei der Informationsträger (L) insbesondere als Strahlung, als Massefluss und/oder als Schall ausgebildet ist, insbesondere als Lichtstrahlen, als Luftstrom und/oder als Ultraschall.

7. Turbomaschine nach Anspruch 6, **gekennzeichnet durch** zumindest einen Sensor (101) zum Erfassen des Informationsträgers (L) in Form eines optischen Sensors, eines Masseflussmessers, eines Druckmessers und/oder eines Mikrofons.

8. Turbomaschine nach einem der Ansprüche 6 oder 7, **gekennzeichnet durch** mindestens eine Sendeeinheit (14, 14'), die ausgebildet und eingerichtet ist, den Informationsträger (L) auszusenden, und die insbesondere zumindest eine Lichtquelle (140), Luftdüse und/oder Schallquelle umfasst, wobei die Musterträger (11, 11', 18, 18') zwischen der Sendeeinheit (14, 14') und dem Empfänger (10, 10') angeordnet sind.

9. Turbomaschine nach einem der vorhergehenden Ansprüche, **dadurch gekennzeichnet, dass** die Musterträger (11, 11', 18, 18') jeweils mindestens zwei Musterstellen (110, 180) aufweisen und mindestens zwei Empfänger (10, 10') vorgesehen sind, insbesondere derart, dass die Musterstellen (110, 180) jedes Musterträgers (11, 11', 18, 18') oder die Empfänger (10, 10') entlang eines um die Rotationsachse (R) umlaufenden Winkels (ϕ) versetzt zueinander angeordnet sind oder mit einem unterschiedlichen Versatz entlang des Winkels (ϕ) versetzt zueinander angeordnet sind.

10. Turbomaschine nach Anspruch 9, **dadurch gekennzeichnet, dass** die Empfänger (10, 10') und/oder die Musterstellen (110, 180) jedes Musterträgers (11, 11', 18, 18') jeweils in einer Richtung senkrecht und/oder parallel zur Rotationsachse (R) versetzt zueinander angeordnet sind.

11. Turbomaschine nach einem der Ansprüche 9 oder 10, **dadurch gekennzeichnet, dass** die Musterstellen (110, 180) jedes Musterträgers (11, 11', 18, 18') gemäß einem ersten Muster (M1) angeordnet sind und die Empfänger (10, 10') gemäß einem zweiten Muster (M2) angeordnet sind, wobei das erste Muster (M1) von dem zweiten Muster (M2) verschieden ist.

12. Turbomaschine nach einem der vorhergehenden Ansprüche, **gekennzeichnet durch** mindestens eine Antibeschlageinrichtung (15), welche einen Fluidstrom, insbesondere einen Luftstrom (A), auf den Empfänger (10, 10') und/oder eine Sendeeinheit (14, 14') richtet, um einen Niederschlag aus einem umgebenden Gas auf dem Empfänger (10, 10') zu verhindern.

13. Turbomaschine nach einem der vorhergehenden Ansprüche, **dadurch gekennzeichnet, dass** die Turbomaschine (2) als ein Flugzeugtriebwerk ausgebildet ist.

14. Verfahren zur Messung einer Rotationsbewegung eines drehbaren Bauteils (20, 21), insbesondere einer Welle, einer Turbomaschine (2) mit einem Empfänger (10, 10') und einem ersten Musterträger (11, 11'), der mindestens eine Musterstelle (110) aufweist,
**dadurch gekennzeichnet, dass**
ein zweiter Musterträger (18, 18') mit mindestens einer Musterstelle (180) vorgesehen wird, wobei die Musterträger (11, 11', 18, 18') jeweils mit dem drehbaren Bauteil (20, 21) verbunden werden, sodass sie derart gemeinsam damit um eine Rotationsachse (R) bezüglich dem Empfänger (10, 10') rotierbar sind, dass die Musterstelle (110) des ersten Musterträgers (11, 11') in Deckung mit der Musterstelle (180) des zweiten Musterträgers (18, 18') liegt, und wobei der Empfänger (10, 10') erfasst, ob die Musterstellen (110, 180) in Deckung liegen oder nicht.

15. Verfahren nach Anspruch 14, **dadurch gekennzeichnet, dass** anhand von durch den Empfänger (10, 10') erfassten Informationen ein überlasteter Betriebszustand und/oder ein Wellenbruch des als Welle ausgebildeten drehbaren Bauteils (20, 21) erkannt werden kann und ein Steuersignal an eine Triebwerkssteuerung ausgegeben wird, wenn ein überlasteter Betriebszustand und/oder ein Wellenbruch erkannt wird.
